# EUROPEAN PATENT APPLICATION

(11) **EP 4 092 094 A1**
(43) Date of publication of application: **23.11.2022**
(21) Application number: 21741851.6
(22) Date of filing: 14.01.2021
(51) Int. Cl.: C09J 133/00, C09J 183/00, H02G 1/14, H02G 1/16, C09J 7/22, C09J 7/38

(54) **PRESSURE-SENSITIVE ADHESIVE TAPE**

(30) Priority: 16.01.2020 US 202062961823 P
(71) Applicant: NITTO DENKO CORPORATION, Ibaraki-shi Osaka 567-8680 (JP); Nitto, Inc., Lakewood, New Jersey 08701 (US)
(72) Inventor: YOSHIMATSU Kimihiko, Ibaraki-shi, Osaka 567-8680 (JP); OTAKE Hironao, Ibaraki-shi, Osaka 567-8680 (JP)
(74) Representative: Müller-Boré & Partner Patentanwälte PartG mbB
(86) International application number: PCT/JP2021/001070
(87) International publication number: WO 2021/145382

(57) **Abstract**

The adhesive tape of the present disclosure includes: a substrate; and an adhesive layer disposed on one surface of the substrate. In the adhesive tape of the present disclosure, when a breakdown voltage in a thickness direction of the adhesive tape is represented as X (unit: kV) and an initial elastic modulus evaluated from a stress-strain curve in a tensile test is represented as Y (unit: N/mm), an inequality Y ≤ 4.5X - 22.5 is satisfied. The adhesive tape of the present disclosure has an excellent balance between insulating properties and winding properties in winding work.

## Description

### TECHNICAL FIELD

The present invention relates to an adhesive tape.

### BACKGROUND ART

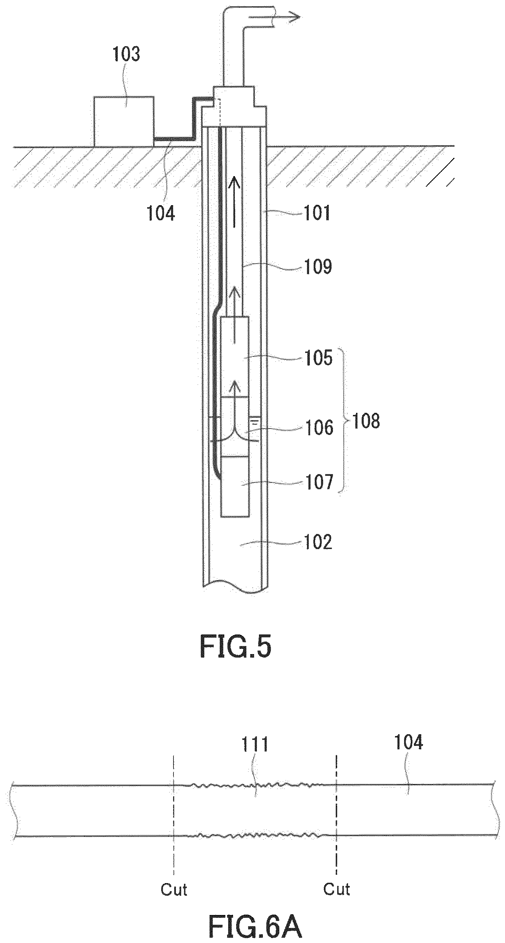

One of the artificial lift methods in oil fields is a method using an electric submersible pump (hereinafter, ESP), namely ESP lift. In the ESP lift, an ESP assembly 108 including a pump 105, an intake 106, and a motor 107 is inserted into a well 101 extending deep underground (see FIG. 5). Crude oil 102 in the well 101 is pushed up to the ground surface via an oil lift pipe 109 by the pump 105 driven by the motor 107. The motor 107 and a control device 103 are normally connected to each other by a power cable 104 disposed on the outer peripheral surfaces of the oil lift pipe 109 and the ESP assembly 108.

The interior of the well 101 is in a harsh environment involving exposure to high temperatures and crude oil components, especially at the deepest part where the ESP assembly 108 is inserted. Therefore, the power cable 104 is likely to be damaged. The damaged power cable 104 is generally lifted from the well 101 and then repaired on site. In the repair, the damaged portion of the power cable 104 is cut for removal. After the cutting, an adhesive tape is used to reconnect a power line of the power cable 104.

In consideration of the above-mentioned harsh environment, it is conceivable to use, for repairing the power cable 104, an adhesive tape having excellent characteristics, namely, heat resistance, chemical resistance, and insulating properties. Patent Literatures 1 and 2 disclose, as adhesive tapes having such excellent characteristics, an adhesive tape including a fluororesin substrate and an adhesive tape including a polyimide substrate, respectively. Note that polyimides normally have higher heat resistance, chemical resistance, and insulating properties than fluororesins.

### CITATION LIST

### Patent Literature

Patent Literature 1: JP H08-253740 A
Patent Literature 2: JP 2005-298579 A

### SUMMARY OF INVENTION

### Technical Problem

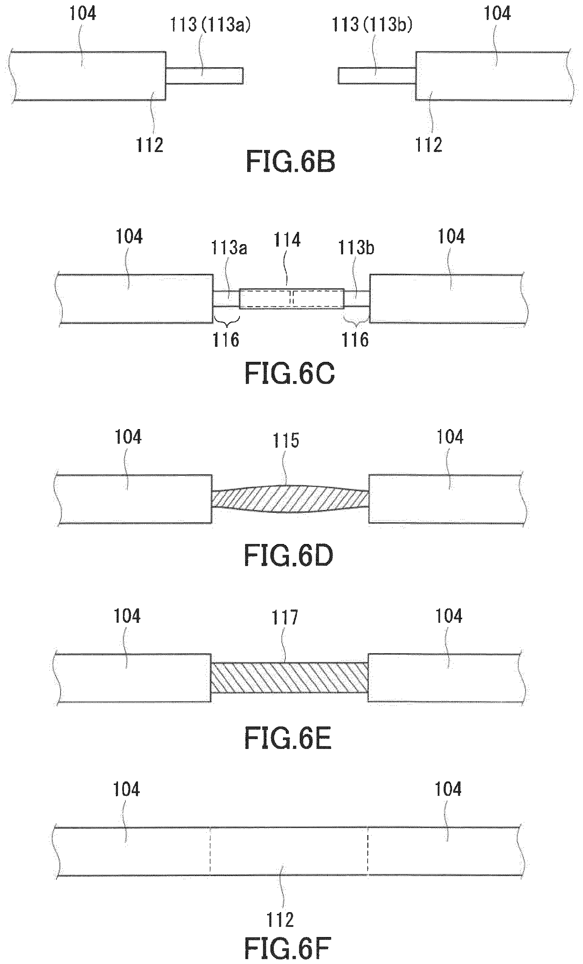

The repair of the power cable 104 is performed typically by the following procedure. First, the damaged portion 111 of the power cable 104 is cut for removal (FIG. 6A). Next, a cover 112 is stripped off to expose the power lines 113a and 113b (FIG. 6B). Next, the power line 113a is inserted into one opening of a sleeve which is a connection member 114 having electrical conductivity, and the power line 113b is inserted into the other opening. Then, the connection member 114 is swaged to electrically connect the power lines 113a and 113b to each other (FIG. 6C). Next, an adhesive tape (inner tape) 115 is wound around the connection member 114 so as to be in contact with the connection member 114. In the case where the power lines 113a and/or 113b are still partially exposed even after the connection by the connection member 114 (see FIG. 6C), it is normal that the adhesive tape 115 is wound around the exposed portions 116 as well as around the connection member 114 in an integrated manner (FIG. 6D). Next, an additional adhesive tape (outer tape) 117 is wound around the wound adhesive tape 115 so as to be in contact with the adhesive tape 115 (FIG. 6E). Next, the predetermined cover 112 is provided so as to cover the adhesive tape 117. This completes the repair of the power cable 104 (FIG. 6F). The adhesive tapes 115 and 117 function as insulating members covering the power lines 113. In the case where the power cable 104 includes a plurality of power lines 113, winding of the adhesive tapes 115 and 117 is performed for each of the power lines 113.

In the repair of the power cable 104, it is required to wind the adhesive tapes 115 and 117 around the target without generating wrinkles and gaps as much as possible. This is because generation of wrinkles and gaps decreases the reliability of the power cable 104 in the repaired portion. However, it is not necessarily easy to wind the adhesive tapes 115 and 117 on site with no wrinkles or gaps. Furthermore, according to studies by the present inventors, increasing the insulating properties of the adhesive tape tends to make it difficult to wind the adhesive tape with no wrinkles or gaps. An adhesive tape that is excellent in both insulating properties and winding properties in actual winding work is required also in works other than the repair work of the power cable.

The present invention aims to provide an adhesive tape having an excellent balance between insulating properties and winding properties in winding work.

### Solution to Problem

The present invention provides an adhesive tape including:
a substrate; and
an adhesive layer disposed on one surface of the substrate, wherein
when a breakdown voltage in a thickness direction of the adhesive tape is represented as X (unit: kV) and an initial elastic modulus evaluated from a stress-strain curve in a tensile test is represented as Y (unit: N/mm),
an inequality Y ≤ 4.5X - 22.5 is satisfied.

### Advantageous Effects of Invention

According to the studies by the present inventors, increasing of the tension applied to the adhesive tape in winding (hereinafter referred to as "winding load") can reduce generation of wrinkles and gaps in winding. However, in actual winding work, the winding load is desired to be low. The adhesive tape according to the present invention can have the minimum winding load causing no wrinkles or gaps (hereinafter referred to as "minimum winding load") lower than conventional adhesive tapes having an equivalent breakdown voltage. Therefore, the adhesive tape according to the present invention has an excellent balance between insulating properties and winding properties in winding work.

### BRIEF DESCRIPTION OF DRAWINGS

FIG. 1 is a cross-sectional view schematically showing an example of the adhesive tape of the present invention.
FIG. 2 is a schematic diagram for describing a winding method in evaluating the minimum winding load of the adhesive tape.
FIG. 3 is a schematic diagram showing another example of the adhesive tape of the present invention.
FIG. 4A is a graph showing a relationship between a breakdown voltage X and an initial elastic modulus Y in each of adhesive tapes of examples and comparative examples.
FIG. 4B is an enlarged graph of a portion in FIG. 4A.
FIG. 5 is a schematic diagram for describing an ESP lift.
FIG. 6A is a schematic diagram for describing a typical repair method for a power cable.
FIG. 6B is a schematic diagram for describing the typical repair method for the power cable.
FIG. 6C is a schematic diagram for describing the typical repair method for the power cable.
FIG. 6D is a schematic diagram for describing the typical repair method for the power cable.
FIG. 6E is a schematic diagram for describing the typical repair method for the power cable.
FIG. 6F is a schematic diagram for describing the typical repair method for the power cable.

### DESCRIPTION OF EMBODIMENTS

Embodiments of the present invention will be described below with reference to the drawings. The present invention is not limited to the following embodiments.

### [Adhesive tape]

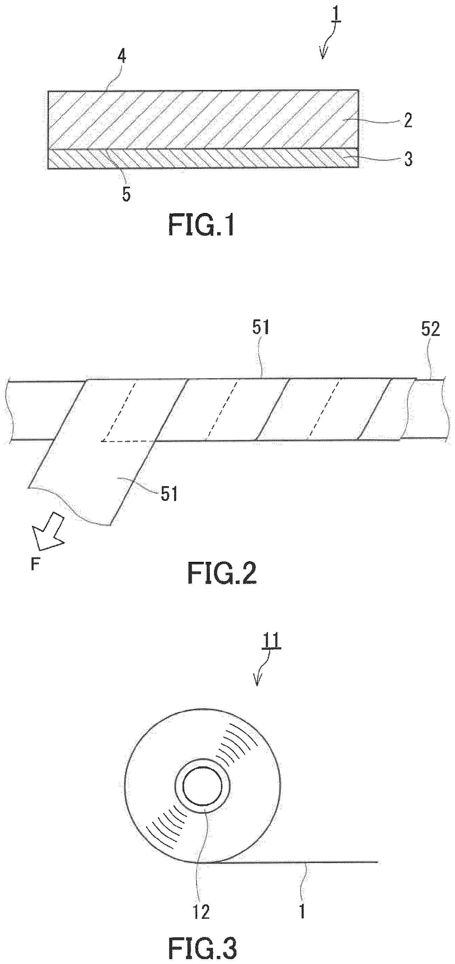

FIG. 1 shows an adhesive tape of the present embodiment. The adhesive tape 1 in FIG. 1 includes a substrate 2 and an adhesive layer 3. The adhesive layer 3 is disposed on one surface of the substrate 2. In the adhesive tape 1, when a breakdown voltage in the thickness direction is represented as X (unit: kV) and an initial elastic modulus evaluated from a stress-strain curve in a tensile test is represented as Y (unit: N/mm), an inequality Y ≤ 4.5X - 22.5 is satisfied. The adhesive tape 1 can have a lower minimum winding load than conventional adhesive tapes having an equivalent breakdown voltage X. In the adhesive tape 1, X and Y may satisfy an inequality Y ≤ 3.89X - 19.45, and may satisfy an inequality Y ≤ 2.75X - 13.75.

The breakdown voltage X is more than 5.0 kV (in other words, Y is positive). The breakdown voltage X may be 8.0 kV or more, 10.0 kV or more, 12.0 kV or more, 14.0 kV or more, 15.0 kV or more, or even 16.0 kV or more. The upper limit of the breakdown voltage X is, for example, 30.0 kV or less.

The initial elastic modulus Y may be 60.0 N/mm or less, 40.0 N/mm or less, 30.0 N/mm or less, 25.0 N/mm or less, 20.0 N/mm or less, 18.0 N/mm or less, 15.5 N/mm or less, 15.0 N/mm or less, 13.5 N/mm or less, or even 10.0 N/mm or less. The lower limit of the initial elastic modulus Y is, for example, 1.0 N/mm or more.

The initial elastic modulus Y reflects the rigidity of the adhesive tape 1 (that is, the difficulty in deforming by force). According to the studies by the present inventors, the minimum winding load tends to be particularly low when the initial elastic modulus Y is 15.5 N/mm or less, particularly 13.5 N/mm or less. In addition, within the range of the breakdown voltage X of 14.0 kV or more, particularly 15.0 kV or more, there is a high tendency for the initial elastic modulus Y to increase with an increase of the breakdown voltage X. However, in some applications, a high breakdown voltage X is desirable even with the initial elastic modulus Y increased to a certain degree. From these viewpoints, the initial elastic modulus Y may be 15.5 N/mm or less (or 13.5 N/mm or less). In addition, the breakdown voltage X may be 14.0 kV or more (or 15.0 kV or more) and the initial elastic modulus Y may be 30.0 N/mm or less (or 25.0 N/mm or less, 15.5 N/mm or less, or 13.5 N/mm or less).

The adhesive tape 1 is normally band-shaped. The initial elastic modulus obtained by performing a tensile test in the longitudinal direction of the band-shaped adhesive tape 1 can be determined as the initial elastic modulus Y. The initial elastic modulus corresponds to a slope in an elastic deformation region in a stress-elongation profile obtained in the tensile test. In the case where the substrate 2 includes a resin layer, this direction is typically a direction in which molecular chains of a resin forming the resin layer are oriented, or the MD direction. Characteristics of the adhesive tape 1, namely, the elongation at break, the strength at break, the 50 mm stress, and the breakdown voltage at a time when a tensile elongation is applied to the adhesive tape 1, each also can be determined as a value obtained by performing a tensile test in the longitudinal direction of the band-shaped adhesive tape 1. The tensile test can be performed according to ASTM D882.

The breakdown voltage in the thickness direction at a time when the tensile elongation of 150% is applied to the adhesive tape 1 may be 5 kV or more, 6 kV or more, or even 8 kV or more. In addition, X (%) in "tensile elongation of X%" is a value calculated by an expression (L₁ - L₀)/L₀, where L₀ is the chuck-to-chuck distance at the test start in a tensile test (initial chuck-to-chuck distance), and L₁ is the chuck-to-chuck distance during the test.

The elongation at break of the adhesive tape 1 may be 100 to 1,000%, 150 to 700%, or even 150 to 600%.

The strength at break of the adhesive tape 1 may be 10 to 300 N/25 mm, 20 to 250 N/25 mm, or even 20 to 220 N/25 mm.

The minimum winding load of the adhesive tape 1 evaluated by the following method may be 2,000 gf or less, 1,600 gf or less, 1,200 gf or less, 1,000 gf or less, 800 gf or less, 600 gf or less, 400 gf or less, or even 200 gf or less.

### Evaluation method:

An adhesive tape 51 to be evaluated is wound around an iron bar 52 having a circular cross section with a diameter of 10 mm so as to be in contact with the iron bar 52 (see FIG. 2). The winding is performed by half-wrap while a constant tension F is applied to the adhesive tape 51. Half-wrap is a winding method in which the adhesive tape 51 moves a distance equivalent to half the width of the adhesive tape 51 for each turn. First, winding for 10 turns or more is tried with a tension F of 100 gf. In the case where the winding is possible with no wrinkles or gaps, the minimum winding load is set to 100 gf. In the case where wrinkles and gaps are generated in the winding, the above try of the winding is repeated with the tension F increased by 100 gf at a time. The initial value of the tension F at which the winding becomes possible with no wrinkles or gaps is set as the minimum winding load. The evaluation temperature is normally 23±2°C.

The characteristics of the adhesive tape 1 can be controlled, for example, by the attribute of the substrate 2. The attribute indicates typically the material and the thickness, but is not limited to these examples. In the substrate 2 including a crystalline resin such as a fluororesin, the degree of crystallinity, the degree of orientation, and the like of the resin can influence the characteristics. Furthermore, in the substrate 2 including a fluororesin, whether firing has been performed or not can influence the characteristics. The degree of crystallinity and the degree of orientation can be controlled, for example, by the rolling condition in formation of the substrate 2.

The substrate 2 normally includes a resin layer. The substrate 2 may be formed of a single layer, or may have a laminated structure of a plurality of layers. The substrate 2 having a laminated structure may include an electrically conductive layer, for example, a metal layer.

Examples of a resin included in the substrate 2 include a fluororesin, a polyimide resin, a polyamideimide resin, and a polyetheretherketone resin. These resins have excellent heat resistance, chemical resistance, and insulating properties. However, the resin is not limited to the above examples. The resin is preferably a fluororesin or a polyimide resin. Especially for the substrate 2 formed of a single resin layer, the resin is preferably a fluororesin. The substrate 2 can include a fluororesin. In addition, a fluororesin substrate is normally thicker than a polyimide resin substrate at an equivalent breakdown voltage X. However, the fluororesin substrate can have a suppressed initial elastic modulus Y compared to the polyimide resin substrate at an equivalent breakdown voltage X. For this reason, the fluororesin substrate can further improve the balance between insulating properties and winding properties in winding work.

Examples of the fluororesin include polytetrafluoroethylene (PTFE), a tetrafluoroethylene-hexafluoropropylene copolymer (FEP), an ethylene-tetrafluoroethylene copolymer (ETFE), and polyvinylidene fluoride (PVDF). From the viewpoint of excellent heat resistance, chemical resistance, and insulating properties, PTFE or an FEP is preferable, and PTFE is particularly preferable.

The substrate 2 may include a material other than a resin. Examples of this material include coloring agents, antistatic agents, fillers such as glass fibers, and other additives. This material in the adhesive tape 1 for the power cable preferably has low electrical conductivity (electric resistivity of 10⁵ Ω•cm or more) or has insulating properties (electric resistivity of 10¹² Ω•cm or more).

The thickness of the substrate 2 may be 25 µm or more, 40 µm or more, 50 µm or more, or even 70 µm or more. The thickness of the substrate 2 within these ranges allows to more reliably achieve a sufficient strength to withstand the use in various applications. The upper limit of the thickness of the substrate 2 is, for example, 250 µm or less.

The substrate 2 does not need to have pores communicating in the thickness direction, and may be non-porous.

An adhesion-improving treatment may be performed on a surface 4 of the substrate 2 on the opposite side to the adhesive layer 3 side. In this case, especially in the case where the substrate 2 includes a fluororesin, the own-backside adhesive strength of the adhesive tape 1 can be improved. The adhesion-improving treatment may be a physical treatment or a chemical treatment. An example of the physical treatment is a sputter etching treatment. An example of the chemical treatment is a sodium (Na) treatment. The Na treatment can be performed, for example, by application of a treatment liquid containing metallic sodium or by immersion into the treatment liquid. Examples of the treatment liquid include an ammonia solution of metallic sodium, and a tetrahydrofuran solution of a metallic sodium-naphthalene complex. A commercially available treatment liquid (e.g., TETRA-ETCH manufactured by Junkosha Inc.) may be used.

Furthermore, the above adhesion-improving treatment may be performed on the surface 5 of the substrate 2 on the adhesive layer 3 side. In this case, the anchoring force of the adhesive layer 3 to the substrate 2 can be improved.

Examples of the adhesive agent included in the adhesive layer 3 include an acrylic-based adhesive agent, a silicone-based adhesive agent, a urethane-based adhesive agent, and a rubber-based adhesive agent. However, the adhesive agent is not limited to the above examples. The silicone-based adhesive agent has particularly excellent heat resistance and chemical resistance. The acrylic-based adhesive agent has particularly excellent adhesiveness.

The acrylic-based adhesive agent is, for example, the adhesive agents disclosed in JP 2005-105212 A. However, the acrylic-based adhesive agent is not limited to the above examples.

The silicone-based adhesive agent is, for example, the adhesive agents disclosed in JP 2003-313516 A (including those disclosed as comparative examples). However, the silicone-based adhesive agent is not limited to the above examples.

The silicone-based adhesive agent generally contains a condensate and/or a crosslinking reaction product of a silicone gum and a silicone resin. The blending ratio (weight ratio) of the silicone gum and the silicone resin in the silicone-based adhesive agent may be 150: 100 to 100: 150. The silicone-based adhesive agent having the blending ratio within the above ranged is excellent in adhesive strength and high-temperature cohesive force. As the high-temperature cohesive force of the adhesive agent becomes higher, the heat resistance holding power of the adhesive tape 1 improves more.

The thickness of the adhesive layer 3 may be 10 to 60 µm, 20 to 55 µm, or even 30 to 50 µm. The thickness of the adhesive layer 3 within these ranges can allow to more reliably achieve sufficient adhesive strength and heat resistance holding power in various applications.

The thickness of the adhesive tape 1 may be 35 µm or more, 50 µm or more, 60 µm or more, or even 80 µm or more. The upper limit of the thickness of the adhesive tape 1 is, for example, 310 µm or less.

The width of the adhesive tape 1 may be 10 to 60 mm, 15 to 50 mm, or even 15 to 35 mm.

The adhesive tape 1 is normally band-shaped. However, the adhesive tape 1 can be processed into any shape. The shape of the processed adhesive tape 1 may be a polygon including a square and a rectangle. As shown in FIG. 3, the adhesive tape 1 may be a wound body 11 wound around a winding core 12.

The adhesive tape 1 may further include a material and/or a layer other than the substrate 2 and the adhesive layer 3. The layer that can be further included in the adhesive tape 1 is, for example, a release layer (separator) disposed on the adhesive layer 3 so as to cover the adhesive layer 3. The separator is normally released when the adhesive tape 1 is used. The surface of the separator facing the adhesive layer 3 may be subjected to a release treatment. The separator includes, for example, a polyester resin such as polyethylene terephthalate (PET), or a polyolefin resin such as polyethylene or polypropylene. The adhesive tape 1 may be wound in the state where the separator is included in the adhesive tape 1.

The adhesive tape 1 may be an insulating tape used for power cables, and may be a repair tape for power cables. The adhesive tape 1 has an excellent balance between insulating properties and winding properties in winding work, and accordingly is advantageous in use in these applications. However, the application of the adhesive tape 1 is not limited to the above examples. In the present description, the power cable means a cable that includes therein a power line through which power is supplied to a motor or the like. The power cable may be a cable for an ESP.

The adhesive tape 1 may be a tape that, in connecting power lines of a power cable to each other using a connection member having electrical conductivity, is used by being wound around the connection member so as to be at least partially in contact with an electrically conducting portion of the connection member (hereinafter, the tape is referred to as "tape A"). An example of the tape A is an inner tape used for repair of the power cable. In winding the tape A around the connection member, the tape A may be further wound around exposed portions of the power line so as to be in contact with the exposed portions. The connection member is a member electrically connecting power lines to each other. The connection member normally includes an electric conductor such as a metal. An example of the connection member is the sleeve described above.

The adhesive tape 1 may be a tape that, in connecting power lines of a power cable to each other using the connection member having electrical conductivity, is used by being wound around the connection member so as to be separated from the electrically conducting portion of the connection member by an insulating member (hereinafter, the tape is referred to as "tape B"). An example of the tape B is an outer tape used for repair of the power cable. In winding the tape B around the connection member, the tape B may be further wound around the exposed portions 116 of the power line so as to be separated from the exposed portions 116 by the insulating member. The insulating member may be a covering portion of the connection member that covers the electrically conducting portion of the connection member, but is typically a member different from the connection member. The insulating member may be another adhesive tape that is wound around the connection member so as to be at least partially in contact with the electrically conducting portion of the connection member. The other adhesive tape may be the tape A.

It is normal that the tape A and the tape B have preferred characteristics that are not completely the same. The preferred characteristics of the tape A and the tape B will be described below.

### [Tape A]

The tape A is wound, for example as an inner tape, so as to level deformations of the connection member 114 due to swaging and/or steps and the like between the connection member 114 and the exposed portions 116 of the power line 113 (see FIG. 6B to FIG. 6D). For this reason, preferred is a tape having a low minimum winding load and a sufficient deformability that can conform to the above deformations, steps, and the like.

The initial elastic modulus Y of the tape A may be 15.5 N/mm or less, 13.5 N/mm or less, or even 10.0 N/mm or less. The tape A having the initial elastic modulus Y within these ranges can have a decreased minimum winding load and an improved deformability. The lower limit of the initial elastic modulus Y may be 5.0 N/mm or more.

The elongation at break of the tape A may be 150% or more, 250% or more, 300% or more, 340% or more, 360% or more, or even 420% or more. The upper limit of the elongation at break is, for example, 500% or less, and may be 480% or less. The tape A having the elongation at break within the above ranges can have a further improved deformability.

The tensile stress at a time when the tensile elongation of 50 mm is applied (hereinafter referred to as "50 mm stress") to the tape A may be 20 N/25 mm or more and 34 N/25 mm or less, or even 22 N/25 mm or more and 28 N/25 mm or less. In addition, Y (mm) in "tensile elongation of Y mm" is a value calculated by an expression L₁ - Lo, where L₀ is the chuck-to-chuck distance at the test start in a tensile test (initial chuck-to-chuck distance), and L₁ is the chuck-to-chuck distance during the test.

In the tape A, the elongation at break may be 340% or more, and the 50 mm stress may be 20 N/25 mm or more and 34 N/25 mm or less. In this case, the winding workability suitable for leveling the above deformations, steps, and the like can be achieved further reliably. The 50 mm stress within the above ranges means that the hardness of the tape A is within a further appropriate range for winding work for leveling deformations and steps. The tape A that is excessively hard tends to decrease in the conformability to deformations and steps. In the worst case, it is assumed that the tape is broken as a result of a forced attempt to conform to deformations and steps. The tape A that is excessively soft tends to easily generate a gap because a sufficient force cannot be applied in winding. Furthermore, the elongation at break within the above ranges means that an appropriate elongation can improve the workability in winding the tape A having the 50 mm stress within the above ranges. Thus, for example, it is possible to prevent an unnecessary increase in work time that can occur when attempting to level deformations and steps. Furthermore, by setting the elongation at break and the 50 mm stress to fall within the above ranges, it is possible to improve the reliability of winding, thereby, for example, preventing the terminal peeling after the winding and oil permeation when oil is present. In the present description, the terminal peeling means a phenomenon that the winding end portion of the adhesive tape is peeled off when the adhesive tape is wound multiple times.

The strength at break of the tape A may be 10 N/25 mm or more, 20 N/25 mm or more, or even 30 N/25 mm or more. The upper limit of the strength at break is, for example, 200 N/25 mm or less, and may be 170 N/25 mm or less, 150 N/25 mm or less, 120 N/25 mm or less, 100 N/25 mm or less, 90 N/25 mm or less, or even 80 N/25 mm or less.

The minimum winding load of the tape A may be 800 gf or less, 600 gf or less, 400 gf or less, or even 200 gf or less. The lower limit of the minimum winding load is, for example, 50 gf or more.

The breakdown voltage X of the tape A may be 15.0 kV or less, 14.0 kV or less, or even 12.0 kV or less.

The breakdown voltage in the thickness direction at a time when the tensile elongation of 150% is applied to the tape A may be 5 kV or more, 6 kV or more, or even 8 kV or more.

The thickness of the tape A may be 50 to 200 µm, or even 60 to 150 µm.

In the tape A, the substrate 2 may include an FEP. The tape A having the substrate 2 including an FEP is particularly excellent in deformability.

### [Tape B]

The tape B is further wound, for example as an outer tape, on the inner tape which is wound. In consideration of the function as an insulating member, the tape B is preferably a tape having excellent piercing strength and own-backside adhesive strength. In a power cable for ESP, a metal sheet such as a lead sheet and/or a glass fiber sheet is sometimes wound on the outer tape as a portion of the cover 112. A high piercing strength suppresses damage to the outer tape caused by winding of the cover 112. On the other hand, the outer tape is not required to have winding properties and deformability as those of the inner tape in many cases.

The initial elastic modulus Y of the tape B may be 25.0 N/mm or less, 20.0 N/mm or less, 15.0 N/mm or less, or even 10.0 N/mm or less. The lower limit of the initial elastic modulus Y is, for example, 5.0 N/mm or more, and may be 10.0 N/mm or more.

The strength at break of the tape B may be 20 N/25 mm or more, 50 N/25 mm or more, or even 70 N/mm or more. The upper limit of the strength at break is, for example, 300 N/25 mm or less, and may be 250 N/25 mm or less, or even 220 N/25 mm or less.

The minimum winding load of the tape B may be 1,400 gf or less, 1,200 gf or less, 1,000 gf or less, 800 gf or less, 600 gf or less, 400 gf or less, or even 200 gf or less. The lower limit of the minimum winding load is, for example, 50 gf or more.

The breakdown voltage X of the tape B may be 8.0 kV or more, 10.0 kV or more, 12.0 kV or more, 14.0 kV or more, 15.0 kV or more, or even 16.0 kV or more.

The piercing strength of the tape B may be 2 to 15 N, 3 to 13 N, or even 3.5 to 11 N. The piercing strength can be measured according to the piercing strength test specified in Japanese Industrial Standards (hereinafter referred to as "JIS") Z1707: 1997. In addition, the needle used for the measurement is set to have the diameter of 0.75 mm and have a semicircular tip with the diameter of 0.75 mm. The needle is set to pierce into the tape B from the substrate 2 side.

The elongation at break of the tape B may be 150% or more, 200% or more, 210% or more, 230% or more, or even 250% or more. The upper limit of the elongation at break is, for example, 700% or less, and may be 620% or less, 500% or less, 400% or less, 300% or less, 280% or less, 250% or less, 230% or less, or even 210% or less.

The 50 mm stress of the tape B may be 56.5 N/25 mm or more, 57.0 N/25 mm or more, 57.5 N/mm or more, 60.0 N/mm or more, or even 75.0 N/25 mm or more. The upper limit of the 50 mm stress is, for example, 100 N/25 mm or less.

The own-backside adhesive strength of the tape B may be 2 to 25 N/25 mm, 3 to 20 N/25 mm, or even 3.5 to 18 N/25 mm. The own-backside adhesive strength can be measured according to "Method 2" in the test method for adhesive strength specified in JIS Z0237: 2009. In the case where the width of a test piece is not 25 mm, the measurement may be performed with the current width, and the measured value may be converted into a value per 25 mm width. In addition, the number of times of reciprocation of a roller for pressure-bonding a first test piece and a second test piece to each other may be one time, and not two times as specified in "Method 2".

In the case where the adhesive layer 3 includes an acrylic-based adhesive agent, the elongation at break of the tape B may be 620% or less and the 50 mm stress may be 60 N/25 mm or more. At this time, the elongation at break may be 500% or less, or even 400% or less. Furthermore, the 50 mm stress may be 75.0 N/25 mm or more. In these cases, for example, the tape B can further reliably achieve a sufficient strength as an outer tape, and an excessive elongation of the tape B in winding can be suppressed, thereby preventing terminal peeling after the winding due to residual stress generated by the elongation and preventing oil permeation when oil is present. Furthermore, at this time, the own-backside adhesive strength of the tape B may be 10 N/25 mm or more, 14 N/25 mm or more, 16 N/25 mm or more, or even 17 N/25 mm or more. Thus, the above terminal peeling and oil permeation can be further suppressed.

Similarly, in the case where the adhesive layer 3 includes a silicone-based adhesive agent, the elongation at break of the tape B may be 280% or less and the 50 mm stress may be 56.5 N/25 mm or more. At this time, the elongation at break may be 250% or less, 230% or less, or even 210% or less. Furthermore, the 50 mm stress may be 57.0 N/25 mm or more, or even 57.5 N/25 mm or more. Moreover, at this time, the own-backside adhesive strength of the tape B may be 3 N/25 mm or more, or 5 N/25 mm or more. The numerical ranges in the case where a silicone-based adhesive agent is included are different from those in the case where an acrylic-based adhesive agent is included because characteristics such as the joining strength are different between these adhesive agents.

The thickness of the tape B may be 50 to 300 µm, 50 to 200 µm, or even 70 to 200 µm.

In the tape B, the substrate 2 may include PTFE.

The tape A and the tape B also can be distributed as an adhesive tape kit including one or both of the tapes.

The power cable repaired using the tape A and the tape B is the repaired power cable including the wound tapes A and B in its repaired portion.

The adhesive tape 1 can be manufactured by forming the adhesive layer 3 on one surface of the substrate 2. The adhesive layer 3 can be formed, for example, by applying an adhesive agent composition to the surface of the substrate 2 and drying and/or curing the applied adhesive agent composition. Known methods are applicable to the application, drying, and curing of the adhesive agent composition.

An example of a method for manufacturing the substrate 2 including a fluororesin will be described below for the case where the fluororesin is PTFE. However, the method for manufacturing the substrate 2 is not limited to the example described below.

First, PTFE powder (molding powder) is introduced into a mold, and a predetermined pressure is applied to the powder in the mold for a predetermined time, thereby performing preforming. The preforming can be performed at ordinary temperature. The shape of the internal space of the mold is preferably columnar in order to enable cutting by a cutting lathe described later. In this case, a columnar preform and a columnar PTFE block can be obtained. Next, the obtained preform is taken out from the mold and fired at a temperature equal to or higher than the melting point (327°C) of PTFE for a predetermined time to obtain a PTFE block. Next, a PTFE sheet that is a cut sheet is obtained by cutting the obtained PTFE block to a predetermined thickness. The obtained PTFE sheet may be used as the substrate 2 with no further treatment, or may be used as the substrate 2 after being subjected to a predetermined treatment such as rolling. In the case where the PTFE block is columnar, it is possible to use a cutting lathe that continuously cuts the surface of the block while rotating the block, and a PTFE sheet can be efficiently formed. In addition, with the cutting lathe, it is relatively easy to control the thickness of a PTFE sheet to be formed, and it is also possible to form a band-shaped PTFE sheet.

### Examples

The present invention will be described in further detail with reference to examples. The present invention is not limited to the following examples.

A method for evaluating the characteristics of adhesive tapes produced in the present examples will be described.

[Initial elastic modulus Y, elongation at break, strength at break, 50 mm stress]

The initial elastic modulus Y, the elongation at break, the strength at break, and the 50 mm stress were evaluated by a tensile test according to ASTM D882. A tensile testing machine used was RTG-1310 manufactured by A&D Company, Limited. The width of the test piece was set to 25 mm, the initial chuck-to-chuck distance was set to 500 mm, the tensile speed was set to 500 mm/min, and the test temperature was set to 23±1°C. The tensile direction was set to the longitudinal direction of the band-shaped adhesive tape.

### [Breakdown voltage X]

The breakdown voltage X was evaluated as follows with a dielectric strength tester (dielectric strength tester TS-EB0270 manufactured by Tokyo Seiden Co., Ltd.). A pair of electrodes (columns having a diameter of 6.4 mm) were disposed so as to sandwich a test piece having a length of 150 mm and a width of 25 mm. The electrodes were disposed in the center of the test piece, such that respective end surfaces of the electrodes were in contact with the adhesive layer or the substrate of the test piece and the electrodes coincided in position with each other when viewed from a direction perpendicular to the surface of the test piece. Next, while one of the electrodes was fixed, a load of 50g was applied to the other electrode to reliably bring the test piece into contact with the electrodes. Next, the electrodes were connected to the dielectric strength tester to apply a voltage between the electrodes at the voltage rise rate of 0.5 kV/sec, and the applied voltage at a time when the test piece was subjected to dielectric breakdown was recorded. The measured value recorded was determined as the breakdown voltage X. The test was performed in air where the temperature and the relative humidity of the test environment were respectively set to 20°C and 65%. The frequency of the applied voltage was set to 50 Hz which was equivalent to the power supply frequency of the tester.

### [Breakdown voltage at time when tensile elongation of 150% is applied to test piece]

The breakdown voltage at a time when the tensile elongation of 150% was applied was obtained in the same manner as the evaluation of the breakdown voltage X, except that a test piece to which the tensile elongation of 150% was applied in the above tensile test was used.

### [Piercing strength]

The piercing strength was evaluated by the method described above. A testing machine used was RTG-1310 (manufactured by A&D Company, Limited).

### [Own-backside adhesive strength]

The own-backside adhesive strength was evaluated by the method described above using a first test piece and a second test piece each having a length of 300 mm and a width of 25 mm. A tensile testing machine used was RTC-1310A manufactured by ORIENTEC CO., LTD. The number of times of reciprocation of the roller was set to one. In addition, for the purpose of improving the measurement accuracy, after the first test piece and the second test piece were pressure-bonded by the roller, the first test piece and the second test piece were left for 20 minutes before a peeling test was performed.

### [Minimum winding load]

The minimum winding load was evaluated by the method described above. The number of windings on the iron bar was set to 10, and the width of the adhesive tape to be wound was set to 25 mm.

### [Terminal Peeling]

The terminal peeling was evaluated in an oil at 220°C as follows. As the oil, a petroleum-based hydrocarbon oil (Therm Oil 500, manufactured by MATSUMURA OIL Co., Ltd.) was used.

A test piece having a width of 20 mm was obtained from the adhesive tape according to the method for preparing a test piece described in JIS Z0237: 2009 (item 4.1). Next, a round bar (diameter: 9.5 mm) made of steel was prepared, and the test piece was wound around the round bar from one end of the test piece by approximately 15 cm in the longitudinal direction of the round bar. The winding was performed by half-wrap in the circumferential direction of the circumferential surface of the round bar while applying a winding tension of 400 gf to the other end of the test piece with a weight. At the time at which the winding by approximately 15 cm became complete, with the above winding tension applied, the test piece was cut in the width direction thereof at an end portion of the wound portion, light force was applied perpendicularly to the surface such that the cut end portion was in close contact with the wound portion, and this end portion was regarded as a terminal portion to be evaluated for peeling resistance characteristics. Next, the round bar around which the test piece had been wound was allowed to stand in the above oil at 220°C for 5 hours, and then evaluation was performed for the peeling amount of the terminal portion (peeling amount along the tape longitudinal direction) of the wound test piece. The case with the peeling amount of 5 mm or less was evaluated as excellent (⊚). The case with the peeling amount of more than 5 mm and 20 mm or less was evaluated as good (∘). The case with the peeling amount of more than 20 mm and 50 mm or less was acceptable (Δ). The case with the peeling amount of more than 50 mm was evaluated as unacceptable (x).

### [Oil permeability]

In the above evaluation of the terminal peeling, the amount of the oil permeated from the terminal portion of the test piece (permeated amount along the longitudinal direction of the round bar) was visually evaluated. The case with the permeated amount of 5 mm or less was evaluated as excellent (⊚). The case with the penetration amount of more than 5 mm and 20 mm or less was evaluated as good (∘). The case with the penetration amount of more than 20 mm and 50 mm or less was evaluated as acceptable (Δ). The case with the penetration amount of more than 50 mm was evaluated as unacceptable (x).

### [Work time required for winding]

A test piece having a width of 20 mm was obtained from the adhesive tape according to the method for preparing a test piece described in JIS Z0237: 2009 (item 4.1). Next, a round bar (diameter: 9.5 mm) made of steel was prepared, and the test piece was wound around the round bar from one end of the test piece by approximately 15 cm in the longitudinal direction of the round bar. The winding was performed by half-wrap in the circumferential direction of the circumferential surface of the round bar while stretching the test piece in the longitudinal direction thereof within the range of 100 to 200% by manual force application to prevent the occurrence of wrinkles and preventing the break caused by the stretching. The winding was performed twice on the same portion of the round bar (double winding). The case with the time from the start to the completion of the above winding of 3 minutes or less was evaluated as excellent (⊚). The case with the time of more than 3 minutes and 5 minutes or less was evaluated as good (o). The case with the time of more than 5 minutes and 10 minutes or less was evaluated as acceptable (Δ). The case with the time of more than 10 minutes was evaluated as unacceptable (x).

### (Example 1)

### [Preparation of PTFE sheet]

PTFE powder (Teflon PTFE 7AX manufactured by Chemours) was introduced into a cylindrical mold and preformed under the conditions of a temperature of 23°C, a pressure of 60 MPa, and a pressure application time of 1 hour. Next, the formed preform was taken out from the mold and fired at 375°C for 3 hours to obtain a columnar PTFE block having a height of 100 mm and an outer diameter of 50 mm. Next, the obtained PTFE block was cut by a cutting lathe to obtain a PTFE sheet having a thickness of 50 µm. In this manner, the PTFE sheet used as a substrate was prepared.

### [Na treatment on PTFE sheet]

A protective tape was attached to one side of the prepared PTFE sheet. As the protective tape, one which causes neither modification nor peel-off from the PTFE sheet in the Na treatment was used. Next, the PTFE sheet was immersed in a treatment liquid (TETRA-ETCH manufactured by Junkosha Inc.) containing metallic sodium, then pulled up, and washed with acetone. Next, the PTFE sheet was immersed in pure water for washing and then dried at 100°C for 1 minute, thereby performing a Na treatment on one side (the main surface on the opposite side to the surface to which the protective tape was attached) of the PTFE sheet. The immersion time of the PTFE sheet in the treatment liquid was set to 30 seconds. In this manner, a substrate including PTFE (PTFE substrate) was obtained.

### [Preparation of silicone-based adhesive agent composition A]

An amount of 100 parts by weight of dimethylpolysiloxane (weight-average molecular weight of 700,000, raw rubber) as a silicone gum and an amount of 120 parts by weight of an MQ resin (weight-average molecular weight of 7,000) as a silicone resin were mixed together with toluene. The MQ resin used was composed of 44 mol% of (CH₃)₃SiO_{1/2} (M unit) and 56 mol% of SiO₂ (Q unit). Next, the obtained mixture was then maintained at 100 to 120°C for 4 hours to partially condense the dimethylpolysiloxane and the MQ resin. Then, toluene was further added to adjust the solid content (nonvolatile content) to obtain a silicone solution (solid content concentration: 60 weight%) composed of the dimethylpolysiloxane, the MQ resin, and a partial condensate thereof. Next, 1.4 parts by weight of a xylene solution of benzoyl peroxide (NYPER BMT-K40 manufactured by NOF CORPORATION) was added to 100 parts by weight of the obtained silicone solution, and the mixture was diluted with toluene to obtain a silicone-based adhesive agent composition A (solid content concentration: 40 weight%).

### [Production of adhesive tape]

The silicone-based adhesive agent composition A was applied to one main surface (Na-treated surface) of the PTFE substrate such that the application thickness after drying was 30 µm, dried at 80°C for 1 minute, and then cured at 235°C for 1 minute to obtain an adhesive tape (thickness: 80 µm).

### (Example 2)

An adhesive tape (thickness: 80 µm) was obtained in the same manner as Example 1, except that the cutting thickness was changed to set the thickness of the substrate to 60 µm and the application thickness (after drying) of the silicone-based adhesive agent composition A was set to 20 µm.

### (Example 3)

An adhesive tape (thickness: 130 µm) was obtained in the same manner as Example 1, except that the cutting thickness was changed to set the thickness of the substrate to 90 µm and the application thickness (after drying) of the silicone-based adhesive agent composition A was set to 40 µm.

### (Example 4)

An adhesive tape (thickness: 230 µm) was obtained in the same manner as Example 1, except that the cutting thickness was changed to set the thickness of the substrate to 180 µm and the application thickness (after drying) of the silicone-based adhesive agent composition A was set to 50 µm.

### (Example 5)

An FEP film (200C manufactured by Chemours, thickness: 50 µm, with one side subjected to an adhesion-enhancing treatment) was prepared as a substrate. The silicone-based adhesive agent composition A was applied to the adhesion-enhancing-treated surface of the film such that the application thickness after drying was 50 µm, dried at 80°C for 1 minute, and then cured at 235°C for 1 minute to obtain an adhesive tape (thickness: 100 µm).

### (Example 6)

An FEP film (JUNFRON manufactured by Junkosha Inc., thickness: 50 µm) was prepared as a substrate, and a sputter etching treatment was performed on one side of the film. The treatment was performed using an argon gas under the conditions of the gas amount of 250 to 1,300 scc/min, the degree of vacuum of 5 Pa, the output of 3 to 7 kW, and the frequency of 13.56 MHz. Next, the silicone-based adhesive agent composition A was applied to the sputter-etched surface of the film such that the application thickness after drying was 50 µm, dried at 80°C for 1 minute, and then cured at 235°C for 1 minute to obtain an adhesive tape (thickness: 100 µm).

### (Example 7)

An adhesive tape (thickness: 90 µm) was obtained in the same manner as Example 1, except that the cutting thickness was changed to set the thickness of the substrate to 60 µm and both sides of the PTFE sheet were subjected to a Na treatment (with use of no protective tape in the treatment).

### (Example 8)

An adhesive tape (thickness: 80 µm) was obtained in the same manner as Example 1, except that both sides of the PTFE sheet were subjected to a Na treatment (with use of no protective tape in the treatment) and a silicone-based adhesive agent composition B was used instead of the silicone-based adhesive agent composition A. The silicone-based adhesive agent composition B was obtained by adding 1.4 parts by weight of a xylene solution of benzoyl peroxide (NYPER BMT-K40 manufactured by NOF CORPORATION) to 100 parts by weight of a silicone-based adhesive agent (KR-101-10 manufactured by Shin-Etsu Chemical Co., Ltd.) and diluting the mixture with toluene to have a solid content concentration of 40 weight%.

### (Example 9)

An adhesive tape (thickness: 190 µm) was obtained in the same manner as Example 1, except that the cutting thickness was changed to set the thickness of the substrate to 140 µm, both sides of the PTFE sheet were subjected to a Na treatment (with use of no protective tape in the treatment), and an acrylic-based adhesive agent composition C was used instead of the silicone-based adhesive agent composition A. In addition, the application thickness (after drying) of the adhesive agent composition C was set to 50 µm, and the drying condition was set to 120°C for 3 minutes. Furthermore, the curing at 235°C for 1 minute was not performed. The acrylic-based adhesive agent composition C was obtained by mixing 100 parts by weight of an acrylic-based adhesive agent (ORIBAIN BPS4991TX manufactured by TOYOCHEM., LTD), 0.5 parts by weight of a crosslinking agent (BXX5983TX manufactured by TOYOCHEM., LTD), and 2.5 parts by weight of a crosslinking agent (BHS8515TS manufactured by TOYOCHEM., LTD).

### (Example 10)

An adhesive tape (thickness: 170 µm) was obtained in the same manner as Example 1, except that the cutting thickness was changed to set the thickness of the substrate to 130 µm, both sides of the PTFE sheet were subjected to a Na treatment (with use of no protective tape in the treatment), and an acrylic-based adhesive agent composition D was used instead of the silicone-based adhesive agent composition A. In addition, the application thickness (after drying) of the adhesive agent composition D was set to 40 µm, and the drying condition was set to 110°C for 3 minutes. Furthermore, the curing at 235°C for 1 minute was not performed. The acrylic-based adhesive agent composition D was obtained as follows.

### [Preparation of acrylic-based adhesive agent composition D]

In a flask (volume: 1 liter) equipped with a stirrer, a thermometer, a condenser, and a nitrogen inlet tube, 95 g of butyl acrylate, 5 g of acrylic acid, and 150 g of toluene were placed and were subjected to nitrogen substitution for 1 hour while being stirred. Next, 0.1 g of benzoyl peroxide was added, and polymerization was allowed to proceed at a temperature of 63°C for 6 hours to obtain a solution of butyl acrylate/acrylic acid copolymer (weight-average molecular weight of 600,000). Next, to the above solution (100 parts by weight in terms of solid content), the following was mixed: 30 parts by weight of a phenol resin (SUMILITERESIN PR-12603 manufactured by SUMITOMO BAKELITE CO., LTD., softening point: 130°C); 30 parts by weight of a xylene formaldehyde tackifier resin (NIKANOL H-80 manufactured by MITSUBISHI GAS CHEMICAL COMPANY, INC.); 1 part by weight of a butylated melamine resin (AMIDIR J-820-60 manufactured by DIC Corporation); and 3 parts by weight of hexamethylene diisocyanate, which is a crosslinking agent (Coronate-L manufactured by Nippon Polyurethane Industry Co., Ltd.). The mixture was diluted with toluene to have a solid content concentration of 30 weight% to obtain an adhesive agent composition D.

### (Comparative Example 1)

Used as Comparative Example 1 was a commercially available adhesive tape (No. 923UT manufactured by NITTO DENKO CORPORATION, thickness: 40 µm) having a PTFE sheet as a substrate and an adhesive layer including a silicone-based adhesive agent.

### (Comparative Example 2)

Used as Comparative Example 2 was a commercially available adhesive tape (No. 360UL_1 mil manufactured by NITTO DENKO CORPORATION, thickness: 60 µm) having a polyimide sheet as a substrate and an adhesive layer including a silicone-based adhesive agent.

### (Comparative Example 3)

Used as Comparative Example 3 was a commercially available adhesive tape (No. 360UL_2 mil manufactured by NITTO DENKO CORPORATION, thickness: 80 µm) having a polyimide sheet as a substrate and an adhesive layer including a silicone-based adhesive agent.

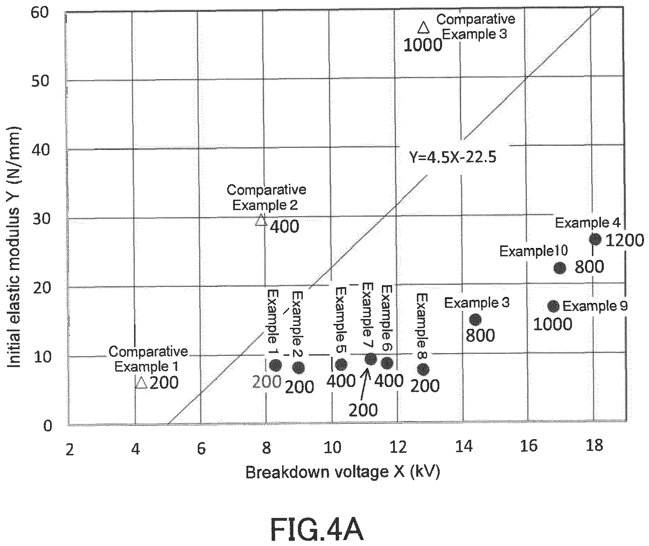

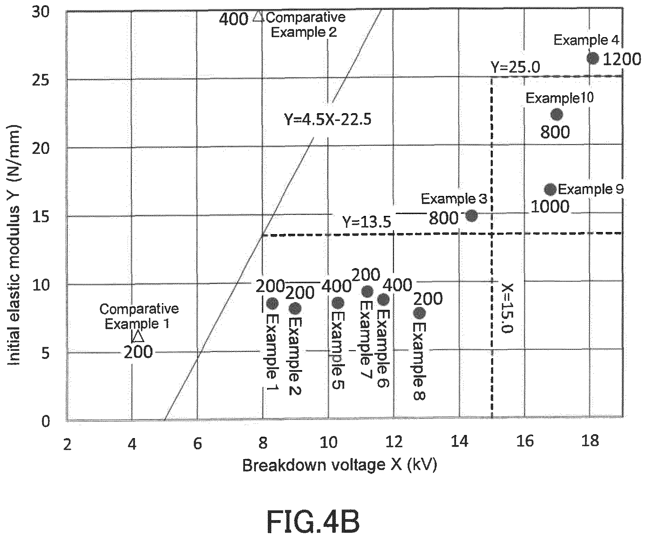

Table 1 below shows the thickness of and the material of the substrate of the adhesive tapes. Table 2 below shows the characteristics of the adhesive tapes. Table 3 below shows the characteristics of the adhesive tapes in winding. Furthermore, FIG. 4A and FIG. 4B show the relationship between the breakdown voltage X and the initial elastic modulus Y in the adhesive tapes together with the values of the minimum winding load. FIG. 4B is a graph in which the range of the initial elastic modulus Y ≤ 30.0 in FIG. 4A is enlarged. The numerical value described in the vicinity of each of markers in FIG. 4A and FIG. 4B represents the minimum winding load.

**[Table 1]**

| | Thickness (µm) | Material of substrate |
|---|---|---|
| Example 1 | 80 | PTFE |
| Example 2 | 80 | PTFE |
| Example 3 | 130 | PTFE |
| Example 4 | 230 | PTFE |
| Example 5 | 100 | FEP |
| Example 6 | 100 | FEP |
| Example 7 | 90 | PTFE |
| Example 8 | 80 | PTFE |
| Example 9 | 190 | PTFE |
| Example 10 | 170 | PTFE |
| Comparative Example 1 | 40 | PTFE |
| Comparative Example 2 | 60 | Polyimide |
| Comparative Example 3 | 80 | Polyimide |

**[Table 2]**

| | | Breakdown voltage X (kV) | Breakdown voltage at tensile elongation of 150% (kV) | Initial elastic modulus Y (N/mm) | Strength at break (N/25mm) | 50mm stress (N/25mm) | Elongation at break (%) | Piercing strength (N) | Own-backside adhesive strength x (N/25mm) |
|---|---|---|---|---|---|---|---|---|---|
| Example | 1 | 8.3 | 5.1 | 8.5 | 71.0 | 26.3 | 422 | 2.3 | 4.0 |
| | 2 | 9.0 | - | 8.1 | 78.2 | 35.1 | 276 | 3.8 | 3.8 |
| | 3 | 14.4 | - | 14.8 | 160.4 | - | 392 | 6.8 | 4.5 |
| | 4 | 18.1 | - | 26.3 | 278.6 | - | 386 | 9.2 | 6.3 |
| | 5 | 10.3 | 9.8 | 8.5 | 44.9 | 22.4 | 450 | - | - |
| | 6 | 11.7 | 9.6 | 8.7 | 23.6 | 19.9 | 347 | - | - |
| | 7 | 11.2 | - | 9.3 | 165.7 | 57.5 | 201 | 6.9 | 5.8 |
| | 8 | 12.8 | - | 7.7 | 154.3 | 56.1 | 270 | 8.2 | 6.2 |
| | 9 | 16.8 | - | 16.7 | 218.8 | 79.1 | 385 | 10.2 | 17.3 |
| | 10 | 17.0 | - | 22.2 | 152.3 | 54.1 | 607 | 8.3 | 15.0 |
| Comparative Example | 1 | 4.2 | - | 6.2 | 81.8 | - | 67 | - | - |
| | 2 | 7.9 | - | 29.6 | 164.1 | - | 70 | - | - |
| | 3 | 12.9 | - | 57.3 | 311.9 | - | 73 | - | - |

| | | | | | | | | | |
|---|---|---|---|---|---|---|---|---|---|
| * The sign "-" indicates no measurement. | | | | | | | | | |

**[Table 3]**

| | | Minimum winding load (gf) | Terminal peeling | Oil permeability | Work time required for winding work |
|---|---|---|---|---|---|
| Example | 1 | 200 | ⊚ | ⊚ | ⊚ |
| | 2 | 200 | ⊚ | ⊚ | Δ |
| | 3 | 800 | - | - | - |
| | 4 | 1,200 | - | - | - |
| | 5 | 400 | ∘ | ⊚ | ⊚ |
| | 6 | 400 | Δ | Δ | Δ |
| | 7 | 200 | ⊚ | ⊚ | - |
| | 8 | 200 | Δ | ⊚ | - |
| | 9 | 1,000 | ⊚ | Δ | ⊚ |
| | 10 | 800 | Δ | Δ | - |
| Comparative Example | 1 | 200 | - | - | - |
| | 2 | 400 | - | - | - |
| | 3 | 1,000 | - | - | - |

| | | | | | |
|---|---|---|---|---|---|
| * The sign "-" indicates no measurement. | | | | | |

As shown in Table 3, FIG. 4A, and FIG. 4B, the adhesive tapes of the examples each exhibited a lower minimum winding load than the adhesive tapes of the comparative examples exhibiting an equivalent breakdown voltage X.

### INDUSTRIAL APPLICABILITY

The adhesive tape of the present invention is suitable for various applications that require an excellent balance between insulating properties and winding properties in winding work, for example, for repair work of a power cable through which power is supplied to an ESP assembly.

## Claims

1. An adhesive tape comprising:
a substrate; and
an adhesive layer disposed on one surface of the substrate, wherein
when a breakdown voltage in a thickness direction of the adhesive tape is represented as X (unit: kV) and an initial elastic modulus evaluated from a stress-strain curve in a tensile test is represented as Y (unit: N/mm),
an inequality Y ≤ 4.5X - 22.5 is satisfied.

2. The adhesive tape according to claim 1, wherein
the breakdown voltage X is 14.0 kV or more, and
the initial elastic modulus Y is 30.0 N/mm or less.

3. The adhesive tape according to claim 1 or 2, wherein
the initial elastic modulus Y is 15.5 N/mm or less.

4. The adhesive tape according to any one of claims 1 to 3, wherein
a breakdown voltage in the thickness direction at a time when a tensile elongation of 150% is applied to the adhesive tape is 5 kV or more.

5. The adhesive tape according to any one of claims 1 to 4, wherein
the substrate includes a fluororesin.

6. The adhesive tape according to claim 5, wherein
the fluororesin is polytetrafluoroethylene (PTFE) or a tetrafluoroethylene-hexafluoropropylene copolymer (FEP).

7. The adhesive tape according to any one of claims 1 to 6, being an insulating tape for a power cable.

8. The adhesive tape according to any one of claims 1 to 7, being for repair of a power cable.

9. The adhesive tape according to claim 7 or 8, wherein
the power cable is a cable for an electric submersible pump.

10. The adhesive tape according to any one of claims 1 to 9, wherein
in connecting power lines of a power cable to each other using a connection member having electrical conductivity, the adhesive tape is used by being wound around the connection member so as to be at least partially in contact with an electrically conducting portion of the connection member.

11. The adhesive tape according to claim 10, wherein
the initial elastic modulus Y is 15.5 N/mm or less.

12. The adhesive tape according to claim 10 or 11, wherein
an elongation at break is 150% or more.

13. The adhesive tape according to any one of claims 10 to 12, wherein
an elongation at break is 340% or more, and
a tensile stress at a time when a tensile elongation of 50 mm is applied to the adhesive tape is 20 N/25 mm or more and 34 N/25 mm or less.

14. The adhesive tape according to any one of claims 10 to 13, wherein
the substrate includes an FEP.

15. The adhesive tape according to any one of claims 1 to 9, wherein
in connecting power lines of a power cable to each other using a connection member having electrical conductivity, the adhesive tape is used by being wound around the connection member so as to be separated from an electrically conducting portion of the connection member by an insulating member.

16. The adhesive tape according to claim 15, wherein
a piercing strength is 3.5 N or more.

17. The adhesive tape according to claim 15 or 16, wherein
an own-backside adhesive strength is 3 N/25 mm or more.

18. The adhesive tape according to any one of claims 15 to 17, wherein
the adhesive layer includes an acrylic-based adhesive agent,
an elongation at break is 620% or less, and
a tensile stress at a time when a tensile elongation of 50 mm is applied to the adhesive tape is 60 N/25 mm or more.

19. The adhesive tape according to claim 18, wherein
an own-backside adhesive strength is 10 N/25 mm or more.

20. The adhesive tape according to any one of claims 15 to 17, wherein
the adhesive layer includes a silicone-based adhesive agent,
an elongation at break is 280% or less, and
a tensile stress at a time when a tensile elongation of 50 mm is applied to the adhesive tape is 56.5 N/25 mm or more.

21. The adhesive tape according to any one of claims 15 to 20, wherein
the substrate includes PTFE.

22. The adhesive tape according to any one of claims 15 to 21, wherein
the insulating member is another adhesive tape wound around the connection member so as to be in contact with the electrically conducting portion of the connection member.

23. The adhesive tape according to claim 22, wherein
the other tape is the adhesive tape according to any one of claims 10 to 14.
